# EUROPEAN PATENT APPLICATION

(11) **EP 4 764 807 A1**
(43) Date of publication of application: **24.06.2026**
(21) Application number: 25221489.5
(22) Date of filing: 08.12.2025
(51) Int. Cl.: G06F 3/0486

(54) **DROP TRAY ENGINE(S) FOR PROVIDING A USER-BASED DRAG-AND-DROP ACTION EXPERIENCE**

(30) Priority: 19.12.2024 IN 202411100798; 14.02.2025 US 202519054443
(71) Applicant: Microsoft Technology Licensing, LLC, Redmond, WA 98052 (US)
(72) Inventor: YERAWAR, Achal Subhash, Redmond, Washington, 98052 (US); DAS, Kaustav, Redmond, Washington, 98052 (US); TEJ, Srireddy Ravi, Redmond, Washington, 98052 (US); U, Kiruphakaran P., Redmond, Washington, 98052 (US); DHARIWAL, Jai, Redmond, Washington, 98052 (US); MAKWANA, Naveen, Redmond, Washington, 98052 (US); MODI, Twissa, Redmond, Washington, 98052 (US); GULABRANI, Seema Lal, Redmond, Washington, 98052 (US); CHATTERJEE, Sumit, Redmond, Washington, 98052 (US); SINGH, Pebam Prabin, Redmond, Washington, 98052 (US); GOEL, Shikhar, Redmond, Washington, 98052 (US); ARYA, Tejasvi Champaklal, Redmond, Washington, 98052 (US)
(74) Representative: CMS Cameron McKenna Nabarro Olswang LLP

(57) **Abstract**

Systems and methods for providing a drop tray engine for creating user-based drag-and-drop experiences are provided herein. In an aspect, a drop tray engine detects a drag-and-drop action performed on a content on a user interface of a client device. Responsive to detecting the drag-and-drop action, the drop tray engine determines one or more attributes of the content and determines predicted actions that a respective user is likely to perform with the content based on the one or more attributes. The drop tray engine then generates a drop tray containing action targets representing the predicted actions and displays the drop tray responsive to the drag-and-drop action on the user interface of the client device. Responsive to selection of an action target within the drop tray, the drop tray engine prompts a respective application to execute the associated action.

## Description

### TECHNICAL FIELD

Aspects of the disclosure are related to the field of computer software applications and services and, in particular, to drop tray engines for providing a user-based drag-and-drop action experience, such as providing a drag-and-drop action experience tailored to a respective user or client device.

### BACKGROUND

Drag-and-drop functionality has been a fundamental affordance in operating systems since its introduction in the late 1970s, revolutionizing how users interact with their computers. This intuitive interaction method allows users to select, move, and reposition content or files with a simple click-and-drag motion, fostering a more hands-on and accessible computing experience. Over the decades, the core purpose of drag-and-drop-to move content from one place to another-has remained consistent, though its capabilities have evolved to encompass additional functionalities. In operating systems like Windows^{®} and macOS^{®}, a notable use case is the ability to select a file from a current location and drop the file onto a visible application or destination icon. This seamless integration of movement and functionality underscores the enduring relevance of drag-and-drop as a key interaction method in modern computing environments.

Under conventional frameworks for drag-and-drop actions, the process requires users to manually identify and prepare the target application or destination before initiating the interaction. This typically involves the user opening the application or ensuring that the intended destination is visible or active on the screen. For example, when dragging a file to an application, the user must first locate and open the application or its icon to ensure it can accept the file. Similarly, for moving content between folders or locations, the destination must be navigated to and made accessible. This approach, while effective, places the onus on the user to manage and organize the environment, ensuring that all necessary elements are properly positioned and ready to facilitate the drag-and-drop action.

Accordingly, there is a need for enhanced user-based drag-and-drop action experiences.

### SUMMARY

Technology disclosed herein includes software applications and services that provide a drop tray engine, and its related functions, for providing a user-based drag-and-drop experience. As will be described in greater detail below, a drop tray engine detects when a drag-and-drop action is initiated (e.g., the initiation of the drag portion of the action) on a client device. Responsive to detection of the drag-and-drop action, the drop tray engine determines content selected as part of the drag-and-drop action and identifies one or more attributes of the content. These attributes include a variety of characteristics of the content, such as a file type, file format, filename, file size, and the like. Based on the attributes, the drop tray engine determines actions that a respective user is likely to perform with the selected content. These are referred to herein as "predicted actions." This determination may be made based on historical actions performed by the user or on the respective client device.

Once the predicted actions are identified, the drop tray engine generates a drop tray. The drop tray may overlay a user interface and provide action targets which visually represent the predicted actions. The arrangement of the action targets within the drop tray may be determined based on a ranking of the predicted actions, providing the action targets representing the actions the user is most likely to select in a more prominent position within the drop tray.

From the drop tray, the user can complete the drag-and-drop action by selecting a desired action target with the selected content. Responsive to completion of the drag-and-drop action selecting the desired action target, the drop tray engine prompts a respective action to be performed. For example, the drop tray engine may prompt a respective application to perform the predicted action associated with the action target. In some embodiments, the drop tray engine may prompt the respective application to open and display a respective feature of the application to the user, such as a draft message or email draft for completion. In some embodiments, responsive to completion of the selected action, the drop tray engine may cause the associated client device to generate a haptic response to inform the user of the action's completion.

Systems and methods for providing a drop tray engine for creating user-based drag-and-drop experiences are provided herein. In an aspect, a drop tray engine detects a drag-and-drop action performed on a content on a user interface of a client device. Responsive to detecting the drag-and-drop action, the drop tray engine determines one or more attributes of the content and determines predicted actions that a respective user is likely to perform with the content based on the one or more attributes. The drop tray engine then generates a drop tray containing action targets representing the predicted actions and displays the drop tray responsive to the drag-and-drop action on the user interface of the client device. Responsive to selection of an action target within the drop tray, the drop tray engine prompts a respective application to execute the associated action.

This Summary is provided to introduce a selection of concepts in a simplified form that are further described below in the Technical Disclosure. It may be understood that this Overview is not intended to identify key features or essential features of the claimed subject matter, nor is it intended to be used to limit the scope of the claimed subject matter.

### BRIEF DESCRIPTION OF THE DRAWINGS

Many aspects of the disclosure may be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views. While several embodiments are described in connection with these drawings, the disclosure is not limited to the embodiments disclosed herein. On the contrary, the intent is to cover all alternatives, modifications, and equivalents.
Figure 1 illustrates an operational environment for providing a drop tray engine, according to an embodiment herein;
Figure 2 illustrates a system for providing a drop tray engine and related functions, according to an embodiment herein;
Figure 3 illustrates a process for providing the drop tray engine and its related functions, according to an embodiment herein;
Figure 4 illustrates a user interface depicting an example drag-and-drop action that initiates the drop tray process, according to an embodiment herein;
Figure 5 illustrates the user interface of Figure 4 including an example drop tray generated by a drop tray engine, according to an embodiment herein;
Figure 6 illustrates an example feature of an application prompted by a drop tray engine responsive to an action target selection, according to an embodiment herein;
Figure 7 illustrates an example drop tray, according to an embodiment herein; and
Figure 8 shows an example client device suitable for providing a drop tray engine and related functions, according to an embodiment herein.

### DETAILED DESCRIPTION

A drag-and-drop action involves the user clicking and holding onto an item, such as a file or piece of content, and moving it across the screen to a desired or target destination. Under conventional approaches, this interaction relies heavily on the user's preparation of the interface beforehand. Specifically, the target application, folder, or destination must already be visible or accessible during the drag-and-drop process. This requires users to navigate their workspace and ensure that the destination is open or positioned on the screen to receive the dragged content. The visibility of the target is essential, as it allows the user to visually confirm the interaction and complete the action within the intended context.

For example, in Windows^{®}, if a user wants to move a file to a folder, they must first locate and open the destination folder or otherwise make it accessible for the drop action. Similarly, in macOS^{®}, opening a file with an application often requires the user to ensure the application is visible in the dock or otherwise easily reachable. This requirement to manage and prepare the workspace disrupts the fluidity of the task, adding an extra step to the interaction. As a result, users are burdened with the need to pre-arrange their environment, which can hinder efficiency and make what should be an intuitive process more cumbersome.

Beyond visibility, users must also ensure that the destination is ready to perform the desired action. In many cases, applications can handle multiple actions, requiring the user to pre-configure the application to a specific state before initiating a drag. For example, to add an image to a file, the user must first open an application and then navigate to the specific file where they intend to drop the image. This preparatory step can be cumbersome, particularly in time-sensitive workflows or when managing multiple files or destinations.

The physical display size and placement of the destination for a drop further complicates the interaction, particularly when the destination is small or scattered. Modern operating systems offer numerous drop targets, some of which are accompanied by quite small representations, increasing the likelihood of inaccuracies during the drop action. These challenges are exacerbated when users rely on touchscreens or other input methods with lower precision compared to a mouse. As touchscreen devices become more prevalent, the frequency of errors and user frustration associated with small or difficult-to-target drop zones is likely to grow, highlighting a critical limitation of traditional drag-and-drop frameworks.

To address these and other shortcomings, an example drop tray engine, and its related functions, is provided herein to provide an enhanced drag-and-drop experience. As will be expanded on in greater detail below, the drop tray engine provided herein tailors the drag-and-drop experience to the user performing the action such as by identifying actions that the user is likely to take with the selected content and providing action targets representing these predicted actions to the user. As used herein, content that is selected during a drag-and-drop action may include any selectable item or object within a computing environment, such as a file, folder, image, text block, hyperlink, application icon, or any other element that can be interacted with and moved within the system.

In some embodiments, the drop tray engine also prepares the target application or destination to perform the predicted action upon selection of an associated action target. For example, if the drop tray engine determines that the user is likely to send the selected content to a particular contact via a messaging or email application, the drop tray engine may cause the message to be prepared within the respective application to include the contact as the intended recipient of the message or otherwise generate an action target of sending the message to the contact. In this manner, not only does the user not have to navigate separately to the messaging or email application, but the user does not have to open the respective application and identify the recipient as the identified contact. The drop tray engine performs these steps automatically on behalf of the user.

By identifying the actions that the user is likely to take with selected content, the drop tray engine provides an enhanced drag-and-drop experience for a user. That is, by anticipating an action for the user, the drop tray engine allows the user to accomplish his or her task with minimal disruption to productivity and workflow. This in turn, increases the efficiency of the drag-and-drop action, allowing the user to focus on the task at hand, instead of having to navigate to the target application or destination, and in some cases, prepare the target application or destination to perform the desired action. Moreover, by providing predicted action targets to the user in a drop tray, the drop tray engine minimizes errors that are often experienced during drag-and-drop actions, thereby reducing user frustration and improving the user experience.

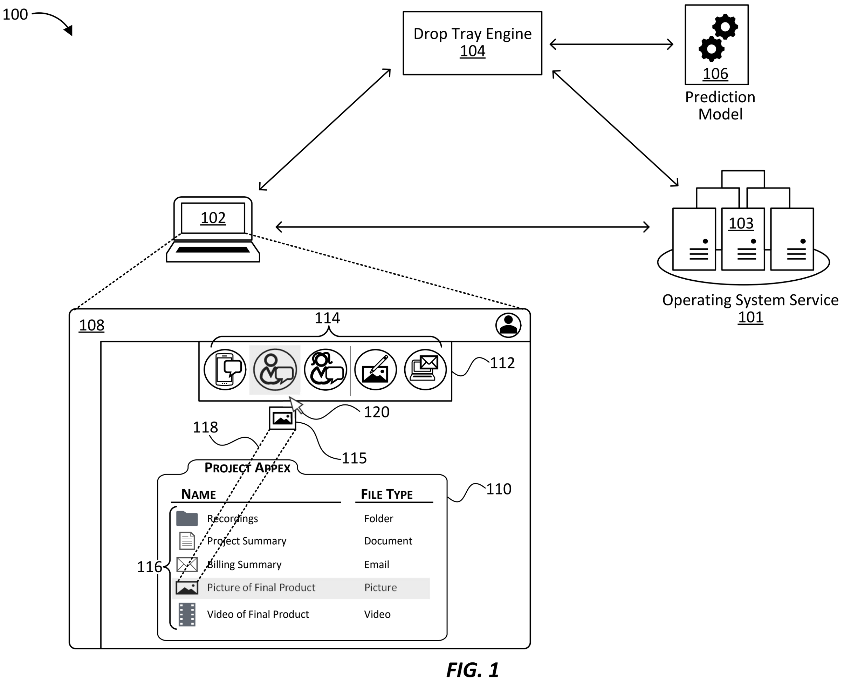

Turning now to **Figure 1,** Figure 1 illustrates an operational environment 100 providing a drop tray engine 104, according to an embodiment herein. As illustrated, a client device 102 is in operable communication with an operating system service 101. Broadly speaking, the operating system service 101 provides core operating system functionalities to endpoints such as the client device 102, enabling essential computing capabilities like resource management, file handling, user interface interaction, and device connectivity. The client device 102 interacts with and utilizes the services of the operating system service 101 to manage applications and system-level tasks. These interactions may include processes like file system operations, network communications, hardware interface control, or any other operating system-level functions. Example services and resources provided by the operating system service 101 include kernel services, virtual memory management, input/output management, authentication services, and device drivers.

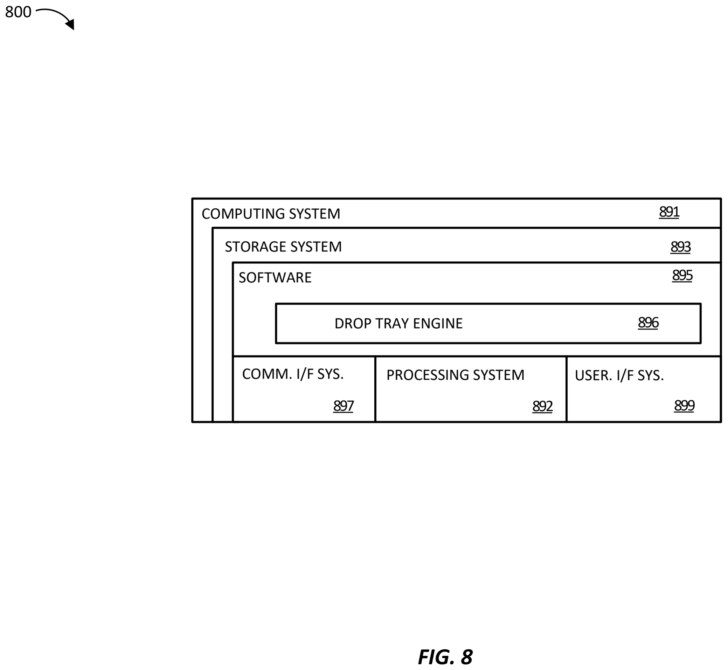

To provide this functionality, the operating system service 101 employs one or more server computers 103 co-located with respect to each other or distributed across one or more data centers. Example servers include resource management servers, virtualization servers, security servers, or any combination or variation thereof, of which computing apparatus 891 in Figure 8 is broadly representative.

The client device 102 communicates with the operating system service 101 via one or more internets and intranets, the Internet, wired and wireless networks, local area networks (LANs), wide area networks (WANs), or any other type of network or combination thereof. Examples of the client device 102 may include personal computers, tablet computers, mobile phones, gaming consoles, wearable devices, Internet of Things (IoT) devices, and any other suitable devices, of which computing apparatus 891 in Figure 8 is also broadly representative.

The operating system service 101 also includes an integration with the drop tray engine 104 for providing a user-based drag-and-drop experience. As illustrated, a user of the client device 102 interacts with various content 116 through a user interface 108. The user interface 108 provides interactive elements and visual representations of content, enabling the user to navigate to a folder 110 that contains diverse content 116. Within this folder 110, the user can identify and select specific content 115 to initiate a drag-and-drop action 118. The content 116 can include a wide range of types, such as files, images, messages or emails, videos, or other selectable digital objects. It should be appreciated that while the depicted example shows the content 116 selected from within the folder 110, the content 116 may be located and selected from any location within the computing environment, such as within a file, text, or a web page. In the illustrated example, the selected content 115 is a picture file, which the user intends to relocate or interact with through the drag-and-drop process.

To initiate the drag-and-drop action 118, the user selects the content 115 using an input mechanism, such as a cursor 120 controlled by a pointing device like a mouse or trackpad. In environments equipped with touchscreen capabilities, the user may achieve the same selection through direct interaction with the user interface 108, such as tapping or pressing on the content 115 with a finger or stylus. Alternatively, non-contact methods such as gestures or voice commands may also be used to select the content 115. Responsive to the selection, the selected content 115 enters a state to support the subsequent dragging action. During the drag-and-drop action 118, the user interface 108 dynamically updates to provide visual feedback, such as highlighting the selected content 115 and/or displaying an icon that follows the cursor 120 or finger, indicating that the drag-and-drop action 118 is active. The precision and responsiveness of the selection and dragging mechanisms during the drag-and-drop action 118 may vary to accommodate a range of interaction modalities, ensuring compatibility with various hardware configurations and user preferences.

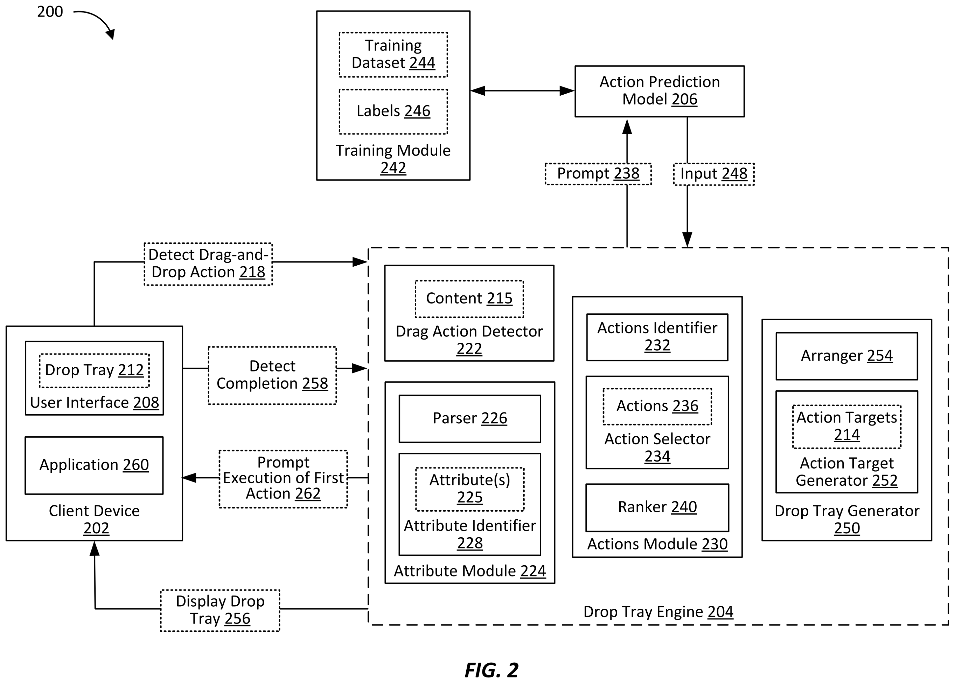

Unlike conventional approaches, the user of the client device 102 does not need to identify and/or navigate to a target application or destination for completion of the drag-and-drop action 118. Instead, responsive to the selection of the content 115, the drop tray engine 104 predicts actions that the user is likely to take based on the characteristics of selected content 115. That is, the drop tray engine 104 analyzes the content 115 to extract various attributes, such as file type, metadata, format, and associated contextual data (e.g., permissions, source application, or user behavior history). For instance, the drop tray engine 104 may parse the content 115 to identify its MIME type (e.g., image/jpeg, application/pdf, or text/plain), file extension, or embedded metadata tags (e.g., EXIF data for images or headers for document files). Extraction and analysis of the attributes of the selected content 115 is described in greater detail below with respect to Figures 2-7.

In some embodiments, in addition to the specific attributes of the selected content 115, the drop tray engine 104 infers the intent of the user by correlating the extracted attributes with predefined rules, machine learning models, or a combination of both. As will be described in greater detail below, the drop tray engine 104 may be in operable communication with a prediction model 106. The prediction model 106 may be a machine learning model that analyzes content interactions performed via the client device 102 to extrapolate predicted behavior of the user with respect to various content. For example, the prediction model 106 analyzes content interactions on the client device 102 and predicts user behavior based on these interactions. As will be described in greater detail below with respect to Figures 2-7, the drop tray engine 104 leverages the prediction model 106 in some scenarios to determine actions that the user is likely to take with the selected content 115 based on the user's historical interactions with content, also referred to herein as historical actions.

Based on these attributes of the selected content 115, and in some cases correlations between the selected content 115 and the user's historical interactions with content, the engine 104 determines a set of actions that are compatible with the content 115 and aligns them with user preferences, application capabilities, or system policies. For example, if the content 115 is an image file (image/jpeg), the engine 104 may identify actions such as opening the content 115 in a photo viewer, editing the selected content 115 in a graphics application, or sharing the content 115 through a messaging or email application. In some cases, the drop tray engine 104 ensures that the predicted actions are compatible with the selected content 115.

Once the actions are identified, the drop tray engine 104 generates a drop tray 112 containing action targets 114 for the respective actions. That is the drop tray engine 104 generates an action target 114 for predicted actions that the user is likely to take with the selected content 115. The action targets 114 may be graphical icons or other visual representations that symbolize the specific actions intended to be performed. The action targets 114 may take the form of a visual elements within the drop tray 112 that convey the associated functionality, such as opening, editing, sharing, sending, or deleting the selected content 115.

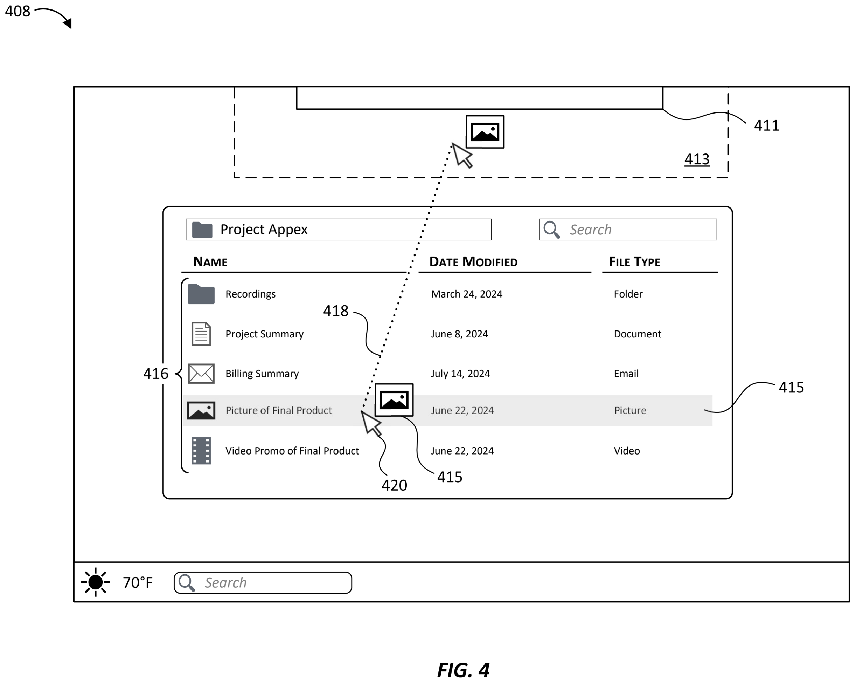

In some embodiments, the drop tray 112 may not be presented to the user via the user interface 108 until the drag-and-drop action 118 is initiated or reaches a certain position within the user interface 108. As will be described in greater detail with respect to Figure 4, the drop tray engine 104 may generate and display the drop tray 112 via the user interface 108 upon the drag-and-drop action 118 reaching a threshold region within the user interface 108. In other embodiments, however, the drop tray engine 104 may display the drop tray 112 responsive to detection of the drag-and-drop action 118.

To complete the drag-and-drop action 118, the user may drag or otherwise direct the content 115 to a desired action target 114 within the drop tray 112. For example, the user may cause the content 115 to overlay the desired action target 114 within the drop tray 112 and/or release the content 115 on the desired action target 114. Responsive to the overlaying and/or release of the content 115 within physical proximity to the desired action target 114, the drop tray engine 104 determines that the drag-and-drop action 118 is completed and may prompt the respective action to be performed with the content 115. As will be described in greater detail below, depending on the action target 114 and the content 115, the drop tray engine 104 may cause a respective application associated with the action target 114 to open or otherwise execute the action represented by the action target 114.

By identifying actions likely to be performed by the user of the client device 102 based on the selected content 115 and/or the historical interactions of the user with other content, the drop tray engine 104 provides an enhanced and tailored drag-and-drop experience. Moreover, the drag-and-drop experience provided by the drop tray engine 104 reduces the preparation and number of steps required of the user to perform the drag-and-drop action 118, thereby streamlining the experience. Furthermore, by displaying the action targets 114 within the drop tray 112, which is overlaid on the user interface 108, the drop tray engine 104 minimizes drop errors by providing a clear and contained area for drag-and-drop operations, reducing the likelihood of users inadvertently dropping content onto unintended applications or destinations. Moreover, since the drop tray 112 appears dynamically in response to the drag-and-drop action 118, the action targets 114 can be displayed in a larger format. This temporary presentation reduces the likelihood of accidentally dropping content into unintended applications or destinations.

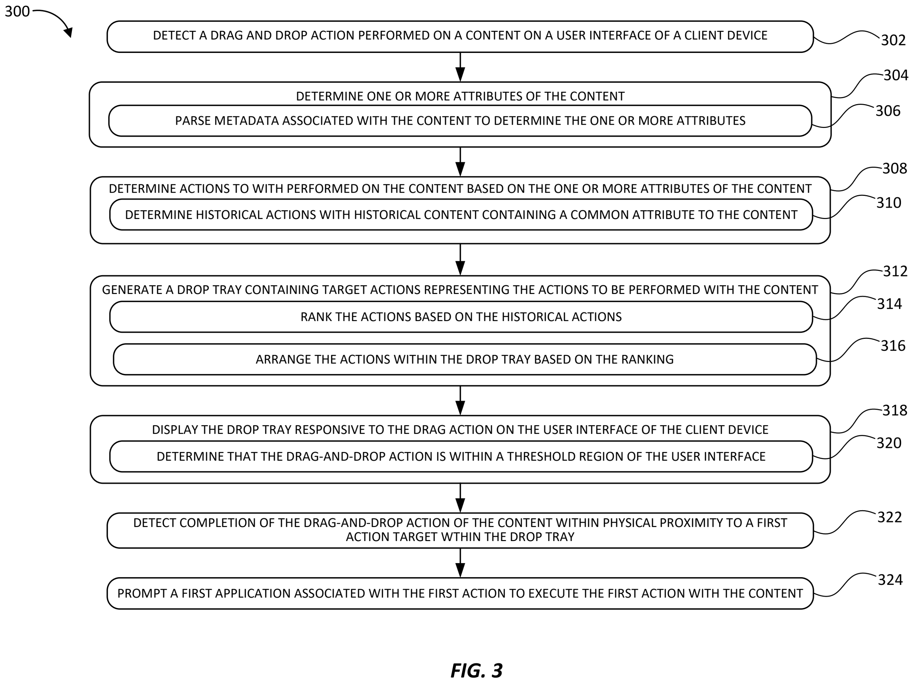

Turning now to **Figure 2****,** a system 200 for providing a drop tray engine 204 is illustrated, according to an embodiment herein. For ease of explanation, Figure 2 is described in combination with Figures 3-7. As such, the following discussion may refer to various figures in turn. In particular, Figure 2 is described with relation to **Figure** 3 which illustrates a process 300 for providing the drop tray engine 204 and its related functions, such as for tailoring a drag-and-drop experience to the user of the client device 202, according to an embodiment herein. The process 300 may be referred to herein as the drop tray process 300. Although the process 300 is described with respect to components and elements of Figure 2, it should be appreciated the one or more steps of the process 300 may be executed or applied to components or elements of any other Figure provided herein.

As illustrated, the system 200 includes the drop tray engine 204 and a client device 202, which may be the same or similar to the drop tray engine 104 and the client device 102, respectively. The drop tray engine 204 is in operable communication with the client device 202, such as an integration with an operation system executing on the client device 202. Although the drop tray engine 204 is illustrated as separate from the client device 202, in some embodiments the drop tray engine 204 may be installed and executed locally on the client device 202, while in other embodiments the drop tray engine 204 may be remotely installed and executed. In yet further embodiments, the drop tray engine 204 may be provided to the client device 202 in via a combination of local and remote components.

To trigger the drop tray process 300, the drop tray engine 204 detects a drag-and-drop action 218 initiated on the client device 202 (302). For instance, when a user of the client device 202 selects content, such as the content 115, and initiates a drag-and-drop action 218 as described above, the drop tray engine 204 is activated and begins performing one or more steps of the drop tray process 300. In particular, the drop tray engine 204 may include a drag action detector 222 that monitors the client device 202 to determine when a drag-and-drop action 218 is initiated on content 215. In some embodiments, the drop tray engine 204 may hibernate on the client device 202 until a drag-and-drop action 218 is detected, at which point the drop tray engine 204 is activated to perform the functionality described herein.

With reference to **Figure 4****,** a user interface 408 depicting an example drag-and-drop action 418 that initiates the drop tray process 300 is illustrated, according to an embodiment herein. The user interface 408, which may be the same or similar to the user interface 108 may be associated with the client device 202 such that when the respective user selects content 415 and begins the drag-and-drop action 418, the drop tray engine 204 is initiated. As illustrated, the user interface 408 includes content 416 containing a variety of different file types. From the content 416, the user selects the content 415 by clicking and holding with a pointing device, such as a cursor 420, and initiates a "drag" action by moving the content 415 toward a desired location within the user interface 408.

As noted above, when the user initiates the drag-and-drop action 218/418, the drag action detector 222 may detect the drag action and activate the drop tray engine 204. In some embodiments, however, the drop tray engine 204 is not activated until the user drags the content 415 into a threshold region 413 of the user interface 408. As can be appreciated, the user may desire to rearrange the content 415 within the user interface 408 or otherwise drag content 415 to a location without triggering the drop tray engine 204. As such, the drag action detector 222 may not activate the drop tray engine 204 until the drag-and-drop action 418 enters a threshold region 413 within the user interface 408.

As shown, the threshold region 413 is an area of the user interface 408 located around a drop tray nudge 411. The drop tray nudge 411 may be a tab or visual representation of the drop tray functionality provided on the user interface 408, such as responsive to any drag-and-drop action 218 detected. By providing the drop tray nudge 411, the drop tray engine 204 provides the user a visual indication that the drop tray is available for activation. In some embodiments, the drop tray nudge 411 is persistent on the user interface 408, while in other embodiments, the drop tray nudge 411 appears responsive to a user starting a drag-and-drop action 418. In additional cases, no drop tray nudge 411 may be used within the drop tray process, instead a designated area of the user interface is used to activate the drop tray engine 204. It should be noted that the positioning and sizing of the drop tray nudge 411 and the threshold region 413 within the user interface 408 are provided for illustrative purposes only. The drop tray nudge 411 and the threshold region 413 can be placed anywhere within the user interface 408 and can have any size.

Returning now to Figure 2, responsive to detecting the drag action 218, the drop tray engine 204 determines one or more attributes of the content 215 (304). In particular, the drop tray engine 204 may include an attribute module 224 that determines the attributes of the content 215. The attribute module 224 includes a parser 226 that parses metadata associated with the content 215 and an attribute identifier 228 that determines the one or more attributes 225 of the content 215 based on the parsing (306). That is, the attribute module 224 analyzes the content 215 by utilizing the parser 226 to extract and interpret metadata associated with the content 215. The metadata parsing process enables the attribute identifier 228 to determine one or more attributes 225 of the content 215, such as its file type, format, timestamp, authorship, access permissions, size, data source or origin, language, encoding type, versioning information, associated tags or classifications, content creation tool or application, the content or subject matter of the content 215, and other relevant metadata.

Using the attributes 225, the drop tray engine 204 then determines actions that the user is likely to perform on or in association with the content 215 (308). In particular, the drop tray engine 204 may include an actions module 230 that determines these predicted actions based on the user's historical actions or recent actions. As illustrated, the actions module 230 includes an actions identifier 232 that determines historical actions or recent actions performed by the user or otherwise associated with the client device 202. That is, the actions identifier 232 determines historical actions performed by the client device 202 and identifies the historical contents involved in the historical actions. Then, the actions identifier 232 identifies one or more historical actions that involve a historical content having a common attribute to the attributes 225 (310). For example, if the content 215 is a picture and thus the attributes 225 indicate the file format as a jpeg, the actions identifier 232 may determine that in the past few months, the client device 202 has saved content having jpeg file formats (e.g., the common attribute to the content 215) to a particular folder.

In some embodiments, the actions identifier 232 may filter the historical actions to only include recent actions, such as actions with historical content having a common attribute within the past predefined time period (e.g., last day, last week, last month). For example, the actions identifier 232 may identify recent applications or destinations that the user recently interacted with or that are actively open on the client device. The actions identifier 232 may determine historical actions based on the user's usage of an associated application or destination, including time of usage, duration of usage, and/or frequency of usage.

In some embodiments, to determine the historical actions performed by the user or client device 202, the actions identifier 232 collaborates with the action prediction model 206 to determine the historical actions performed by the user or the client device 202. The action prediction model 206, which may be the same or similar to the prediction model 106, is a machine learning system designed to analyze interactions with content on the client device 202 and predict user behavior based on these interactions. Specifically, the action prediction model 206 examines historical interactions with content on the client device 202 and the corresponding actions performed.

In embodiments where the client device 202 has limited or no historical interactions with content on the client device 202 (e.g., the user is new), the action prediction model 206 may examine historical interactions with content for client devices to determine predicted actions for the client device 202. For example, during its training (as described below), the action prediction model 206 may identify trends in its training dataset 244 and generate predicted actions based on the general patterns observed for other client devices. By leveraging patterns observed across the broader dataset 244, the action prediction model 206 can make educated guesses about what actions the client device 202 is likely to take with the content 215. As the client device 202 begins to interact with content 215 and other content, the action prediction model 206 may continuously refine its predictions based on the accumulating data, further improving the accuracy of its predicted actions over time.

The action prediction model 206 works in conjunction with a training module 242, which includes a training dataset 244 and associated labels 246. The training dataset 244 includes diverse interaction data, such as clicks, taps, swipes, time spent on specific content, and sequences of actions performed via the client device 202. In an example, the operating system service 101 may monitor the behavior and actions performed on the client device 202 to generate the training dataset 244.

The training dataset 244 also integrates content attributes like file types, formats, tags, and contextual metadata, including timestamps and geolocation, and associates the content attributes with the corresponding action performed by the client device 202. Using the training dataset 244 and the labels 246, the action prediction model 206 extracts features to identify patterns and correlations between user behavior, specific actions, and content attributes. This enables the action prediction model 206 to predict actions the user might perform with selected content by analyzing the interplay of user preferences, historical behavior (time, duration, frequency), and contextual factors (e.g., time of drag-and-drop action, currently active applications on the client device 202).

Depending on its implementation, the action prediction model 206 may use supervised learning techniques, such as decision trees or support vector machines, or more advanced deep learning architectures, such as Convolutional Neural Networks (CNNs) for visual content or Recurrent Neural Networks (RNNs) for sequential data. Reinforcement learning could also be employed to adapt predictions dynamically based on feedback. By processing these inputs, the action prediction model 206 generates a list of predicted actions, such as opening, editing, sharing, or deleting content, tailored to the specific content type and user preferences of the selected content 215. Over time, the action prediction model 206 refines its accuracy through continuous feedback loops, ensuring dynamic and contextually relevant recommendations that optimize the user's workflow on the client device 202.

In some embodiments, the actions identifier 232 generates a prompt 238 including a request for the action prediction model 206 to generate a list of predicted actions based on the content 215. The prompt 238 is submitted to the action prediction model 206, which in turn generates the list based on its training. Once generated, the action prediction model 206 provides the list of predicted actions to the drop tray engine 204 as input 248.

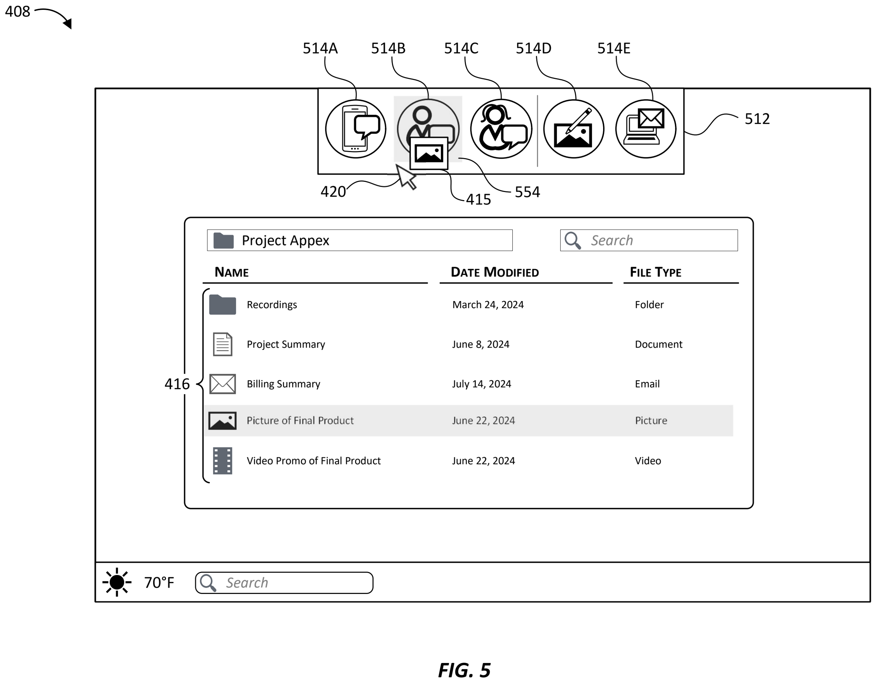

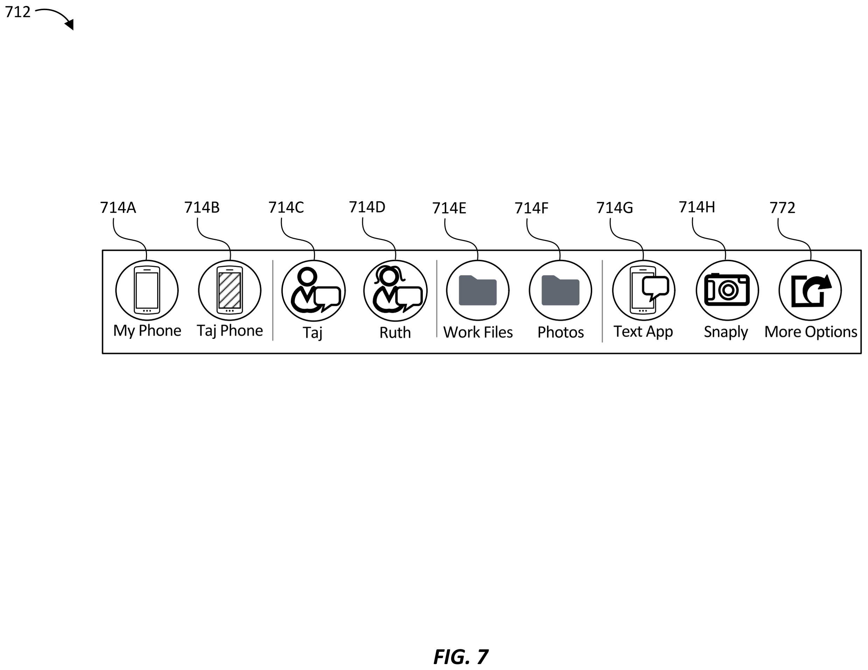

Responsive to identifying predicted actions 236 that the user is likely to take with the content 215, the drop tray engine 204 generates a drop tray 212 containing action targets 214 representing the predicted actions to be performed by the client device 202 (312). The drop tray 212, which may be the same or similar to the drop tray 112, provides action targets 214, which are visual representations of the predicted actions 236, to the client device 202. Illustrative examples of the action targets 214 are provided below with respect to Figures 5 and 7.

To generate the drop tray 212, the drop tray engine 204 includes a drop tray generator 250. As noted above, the drop tray 212 includes the action targets 214 which represent the predicted actions 236. To generate the action targets 214, the drop tray generator 250 includes an action target generator 252. The action target generator 252 coordinates with the actions module 230 to identify the predicted actions 236 and determine an appropriate action target 214 to visually represent a respective predicted action. In an example, if the predicted action 236 is sending content 215 using a messaging application, then the action target may be an icon of the messaging application.

Referring now to **Figure 5****,** the user interface 408 including an example drop tray 512 is illustrated, according to an embodiment herein. The user interface 408, which may be the same or similar to the user interface 408 from Figure 4, includes the drop tray 512 overlaid on the user interface 408 responsive to the drag-and-drop action 418. As described above, as the drag-and-drop action 418 is performed, moving the content 415 towards the drop tray nudge 411, the drop tray engine 204 generates the drop tray 512.

As illustrated, the drop tray 512 includes action targets 514A-E, which may be the same or similar to the action targets 114. Each of the action targets 514A-E represents a respective action 236 that was identified as likely for the user to take with the content 415. For example, the action target 514A may represent sending the content 415 via a messaging application, the action targets 514B-C may represent sending the content 415 to particular contacts via the messaging application, the action target 514D may represent editing the content 415 in a photo editing application, and the action target 514E may represent emailing the content 415 via an email application. Each of these actions represented by the action targets 514A-E were identified by the drop tray engine 204 as predicted actions 236 that the user is likely to perform with the content 415 based on historical actions of the user and/or client device 202.

As noted above, in some embodiments, the predicted actions 236 identified by the drop tray engine 204 include not only an application that the user is likely to use to perform the action, but the particular action the user is likely to perform within the respective application. For example, the drop tray engine 204 may not only predict that the user is likely to send the content 415 via the messaging application but that the user is likely to send the content 415 to a particular contact with the messaging application. In some embodiments, the drop tray engine 204 may determine that the user is going to send the content 415 to the particular contact based on the user's historical actions, while in other embodiments, the drop tray engine 204 may determine that the user is going to send the content 415 to the particular contact based on the attributes 225 (e.g., content/subject matter) of the content 415, or a combination thereof. For example, the drop tray engine 204 may determine that the content 415 is a picture of the particular contact, and as such determine the predicted action 236 is to send the content 415 to that particular contact. As such, when generating the action targets 514A-E, the action target generator 252 may generate the action targets 514B-C for messaging particular contacts via the message application.

In certain embodiments, the action targets 514A-E within tray 512 are organized or otherwise arranged in the drop tray 512 based on the likelihood that each action target will be selected by the user. To determine a specific arrangement of the action targets 514A-E within the drop tray 512, the drop tray engine 204 evaluates and ranks the predicted actions 236 based on the user's historical actions (314). In particular, the actions module 230 includes a ranker 240, which analyzes the historical actions of the user or client device 202 to assign a priority ranking to each predicted action. Once the rankings are established, an arranger 254 organizes the corresponding action targets 514A-E within the drop tray 512 according to the respective rankings of the predicted actions, placing the most likely action targets 514A-E in more prominent or accessible positions (316). This dynamic arrangement enhances usability of the drop tray 512 by tailoring the order of the action targets 514A-E to the user's preferences and behavior.

Returning now to Figure 2, once the drop tray 212 is generated, the drop tray engine 204 displays 256 the drop tray 212 on the user interface 208 of the client device 202 (318). Displaying the drop tray 212 on the user interface 208 may include overlaying the drop tray 212 on content already displayed on the user interface 208, depending on the configuration of the drop tray 212 and the organization of the user interface 208.

As noted above, in some embodiments, the drop tray 212 is displayed on the user interface 208 responsive to determining that the drag-and-drop action 218 is within a threshold region of the user interface 208 (320). For example, when the drop tray engine 204 detects that the drag-and-drop action 418 is within the threshold region 413 on the user interface 408, the drop tray engine 204 may generate and display the drop tray 512. By waiting until the drag-and-drop action 418 enters the threshold region 413 before displaying the drop tray 512, the drop tray engine 204 ensures unobtrusive functionality. This approach minimizes distractions by presenting the drop tray 512 only when the user demonstrates a clear intent to engage with the drop tray engine 204 functionality. In other words, the drop tray engine 204 selectively offers the action targets 514A-E via the drop tray 512 at the appropriate time, enhancing the user experience by avoiding unnecessary interruptions and maintaining a streamlined user interface 208/408/508.

With reference to Figure 2, once the drop tray 212 is displayed via the user interface 208, the user may determine and select which action targets 214, such as the action targets 514A-E, represent the desired target application or destination for the content 215. At this point, the drop tray engine 204 detects completion 258 of the drag-and-drop action of the content 215 (322). In particular, the drop tray engine 204 determines when the content 215 is within and/or released within physical proximity to a first action target of the action targets 514A-E.

With reference to Figure 5, an example completion of the drag-and-drop action 418 is illustrated. As such, when the content 415 is positioned within physical proximity 554 to the action target 514B and released by the cursor 420, the drop tray engine 204 determines that the drag-and-drop action 418 is completed and that the user has selected the action target 514B. Responsive to selection of the action target 514B, the drop tray engine 204 determines the action associated with the action target 514B (herein after the "selected action") and prompts or causes the respective action to execute.

In some embodiments, the selected action involves an application, such as an application 260 operating on the client device 202. As such, the drop tray engine 204 prompts the application 260 associated with the selected action to execute the selected action 262 with the content 415 (324). Following the above example of the user selecting the action target 514B, the selected action is sending the content 415 to the particular contact identified by the action target 514B. As such, responsive to the selection of the action target 514B, the drop tray engine 204 prompts the respective messaging application to generate and send a message containing the content 415 to the identified contact. In some embodiments, such a message is sent with no further input from the user than selection of the action target 514B.

In some embodiments, responsive to the selection of a desired action target, the drop tray engine 204 generates a visual, audible, and/or haptic response to indicate the selection. This may include the drop tray engine 204 causing the client device 202 or an associated peripheral device (e.g., speaker) to perform the audible or haptic response (e.g., playing a respective sound or vibrating), or a visual notification displayed on the user interface, such as for a predefined period of time (e.g., 3-5 seconds) before disappearing. Such haptic feedback provides the user with a tactile confirmation of their action, enhancing the overall user experience by reinforcing the interaction. The visual, audible, and/or haptic response may vary in intensity, duration, or pattern to differentiate between types of selected actions or to convey additional context about the selected action. For example, if the selected action is to send a message to a particular contact, and drop tray engine 204 sends the message including the content 215 upon selection of action target, the drop tray engine 204 may cause the client device 202 to make an audible "woosh" sound. By providing a visual, audible, and/or haptic response, the drop tray engine 204 ensures that users receive immediate and intuitive confirmation of their selection, reducing errors and improving the usability of the drop tray functionality.

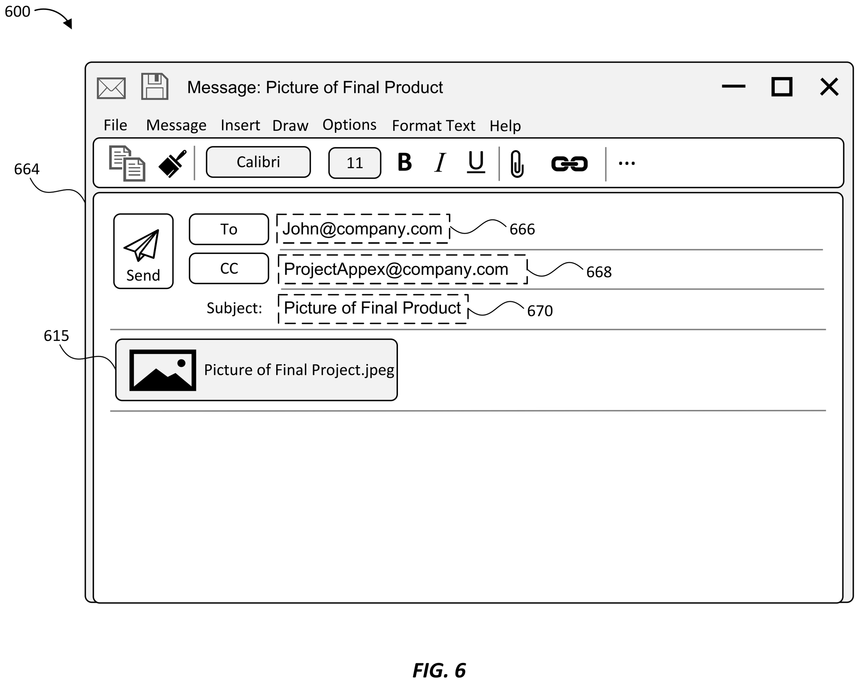

In some embodiments, selection of a respective action target may cause a respective application or destination to open for the user, in some cases, at or in association with a particular feature, depending on the selected action. Referring now to **Figure 6****,** an example feature 600 of an application prompted by the drop tray engine 204 is illustrated, according to an embodiment herein. The feature 600 is an email message draft 664 that is displayed to the user via the user interface 208 responsive to selection of a respective action target 214. For example, the user may have dropped a content 615, which may be the same or similar to the content 215, on the action target 214 representing emailing particular contacts.

In this example, the drop tray engine 204 may have determined, based on the attributes of the content 615 and the user's historical actions, that the user was likely to email the content 615 to a first contact 666 and a second contact 668. As such, when the user selects the action target 214, the drop tray engine 204 prompts a respective email application to display the draft message 664. As illustrated, as part of prompting the email application to display the draft message 664, the drop tray engine 204 also prompts the email application to automatically fill the recipients to include the first contact 666 and the second contact 668 based on the user's historical actions. In some embodiments, the drop tray engine 204 also prompts the email application to fill in the subject line with a title 670. The title 670 may be determined by the drop tray engine 204 based on the attributes 225 of the content 615, such as the filename or other metadata. In some cases, the drop tray engine 204 may also provide a draft message body (not shown), such as a salutation to the first contact 666 and/or the second contact 668 and a note about the content 615 being attached to the email message draft 664. It should be appreciated that the drop tray engine 204 performs similar tasks in other applications, such as filling in a recipient name or phone number in a text message based on the content 615.

Referring now to **Figure 7****,** an example drop tray 712 is illustrated, according to an embodiment herein. The drop tray 712, which may be the same or similar to the drop trays 212 and 512, is generated by a drop tray engine, such as the drop tray engine 204 responsive to detecting a drag-and-drop action performed on a respective client device. As shown, the drop tray 712 includes action targets 714A-H, each representing a respective action that the drop tray engine predicts the user is likely to take with selected content (e.g., content 215, 415).

The action targets 714A-H include the action target 714A for sharing the selected content to the user's phone, the action target 714B for sharing the selected content with Taj's phone, the action target 714C for sending the selected content to Taj via a messaging application, the action target 714D for sending the selected content to Ruth via the messaging application, the action target 714E is to save the selected content in a work files folder, the action target 714F is to save the selected content in a photos folder, the action target 714G is to send the selected content via a text application, and the action target 714H is to edit or otherwise interact with selected content in a photo editing application. The drop tray 712 also includes an option 772 to view additional action targets. As can be appreciated, it may be desirable to limit the number of action targets 714A-H provided in the drop tray 712 for ease of use, ensuring the interface remains intuitive and preventing users from becoming overwhelmed by excessive options.

In some embodiments, the arrangement of action targets 714A-H within the drop tray 712 is determined based on a ranking of the actions associated with each target. Specifically, the drop tray engine evaluates and ranks these actions according to the likelihood that the user will perform a particular action with the selected content. This ranking process considers user behavior patterns, interaction history, and contextual factors to estimate probabilities. For example, the drop tray engine may identify that the user is more likely to select the action target 714A than action target 714H. Consequently, the drop tray engine positions action target 714A on the left-hand side of the drop tray 712, aligning with the natural tendency of users to review content in a left-to-right sequence. Additionally, as shown in the illustrated example, action targets 714A-H may be grouped together based on the type of action. For instance, the messaging action targets 714C-D relating to messaging actions may be grouped together. This intelligent arrangement optimizes accessibility and enhances user efficiency by presenting the most relevant action targets in prominent positions.

Referring to **Figure 8,** Figure 8 illustrates a computing apparatus 891 that may be used for providing a drop tray engine and related functions, as described herein. For example, the client devices 102 or 202 may be or include the computing apparatus 891. As illustrated, the computing apparatus 891 includes a processing system 892 that includes a microprocessor and other circuitry that retrieves and executes software 895 from storage system 893. The processing system 892 may be implemented within a single processing device but may also be distributed across multiple processing devices or sub-systems that cooperate in executing program instructions. Examples of the processing system 892 include general purpose central processing units, graphical processing units, application specific processors, and logic devices, as well as any other type of processing device, combinations, or variations thereof.

The storage system 893 may comprise any computer readable storage media readable by processing system 892 and capable of storing software 895. The storage system 893 may include volatile and nonvolatile, removable and non-removable media implemented in any method or technology for storage of information, such as computer readable instructions, data structures, program modules, or other data. Examples of storage media include random access memory, read only memory, magnetic disks, optical disks, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations the storage system 893 may also include computer readable communication media over which at least some of the software 895 may be communicated internally or externally. The storage system 893 may be implemented as a single storage device but may also be implemented across multiple storage devices or sub-systems co-located or distributed relative to each other. The storage system 893 may comprise additional elements, such as a controller capable of communicating with the processing system 892 or possibly other systems.

The software 895 (including drop tray engine process 896) may be implemented in program instructions and among other functions may, when executed by the processing system 892, direct the processing system 892 to operate as described with respect to the various operational scenarios, sequences, and processes illustrated herein. For example, the software 895 may include program instructions for implementing a drop tray engine and related functions, such as the process 300 as described herein.

In particular, the program instructions may include various components or modules that cooperate or otherwise interact to carry out the various processes and operational scenarios described herein. The various components or modules may be embodied in compiled or interpreted instructions, or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. The software 895 may include additional processes, programs, or components, such as operating system software, virtualization software, or other application software. The software 895 may also comprise firmware or some other form of machine-readable processing instructions executable by the processing system 892.

In general, the software 895 may, when loaded into the processing system 892 and executed, transform a suitable apparatus, system, or device (of which computing apparatus 891 is representative) overall from a general-purpose computing system into a special-purpose computing system customized to generate features, functionality, and user experiences provided by the drop tray engine. Indeed, encoding the software 895 on the storage system 893 may transform the physical structure of the storage system 893. The specific transformation of the physical structure may depend on various factors in different implementations of this description. Examples of such factors may include, but are not limited to, the technology used to implement the storage media of the storage system 893 and whether the computer-storage media are characterized as primary or secondary storage, as well as other factors.

For example, if the computer readable storage media are implemented as semiconductor-based memory, the software 895 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 897 may include communication connections and devices that allow for communication with other computing systems (not shown) over communication networks (not shown). Examples of connections and devices that together allow for inter-system communication may include network interface cards, antennas, power amplifiers, RF circuitry, transceivers, and other communication circuitry. The connections and devices may communicate over communication media to exchange communications with other computing systems or networks of systems, such as metal, glass, air, or any other suitable communication media. The aforementioned media, connections, and devices are well known and need not be discussed at length here.

The user interface system 899 may include a variety of input and output devices designed to facilitate interaction with the computing apparatus 891. For example, the user interface system 899 may encompass display screens, touch-sensitive panels, keyboards, mice, or voice input systems, all of which serve to receive user commands and provide feedback. The user interface system 899 may also include software components that interpret user inputs and generate appropriate responses, such as graphical user interfaces (GUIs) or command-line interfaces (CLIs). These interactions can be processed by the user interface system 899 and communicated to other components, allowing for real-time responses, data manipulation, or control of external devices. As with other elements of the computing apparatus 891, the user interface system 899 is adaptable and can be designed to support a wide range of applications and user needs, ensuring compatibility across various hardware configurations and user preferences.

Communication between the computing apparatus 891 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses and backplanes, or any other type of network, combination of network, or variation thereof. The aforementioned communication networks and protocols are well known and need not be discussed at length here.

While some examples of methods and systems herein are described in terms of software executing on various machines, the methods and systems may also be implemented as specifically-configured hardware, such as field-programmable gate array (FPGA) specifically to execute the various methods according to this disclosure. For example, examples can be implemented in digital electronic circuitry, or in computer hardware, firmware, software, or in a combination thereof. In one example, a device may include a processor or processors. The processor comprises a computer-readable medium, such as a random access memory (RAM) coupled to the processor. The processor executes computer-executable program instructions stored in memory, such as executing one or more computer programs. Such processors may comprise a microprocessor, a digital signal processor (DSP), an application-specific integrated circuit (ASIC), field programmable gate arrays (FPGAs), and state machines. Such processors may further comprise programmable electronic devices such as PLCs, programmable interrupt controllers (PICs), programmable logic devices (PLDs), programmable read-only memories (PROMs), electronically programmable read-only memories (EPROMs or EEPROMs), or other similar devices.

Such processors may comprise, or may be in communication with, media, for example one or more non-transitory computer-readable media, which may store processor-executable instructions that, when executed by the processor, can cause the processor to perform methods according to this disclosure as carried out, or assisted, by a processor. Examples of may include, but are not limited to, an electronic, optical, magnetic, or other storage device capable of providing a processor, such as the processor in a web server, with processor-executable instructions. Other examples of non-transitory computer-readable media include, but are not limited to, a floppy disk, CD-ROM, magnetic disk, memory chip, ROM, RAM, ASIC, configured processor, all optical media, all magnetic tape or other magnetic media, or any other medium from which a computer processor can read. The processor, and the processing, described may be in one or more structures, and may be dispersed through one or more structures. The processor may comprise code to carry out methods (or parts of methods) according to this disclosure.

Examples are described herein in the context of systems and methods for providing a drop tray engine and related functions. Those of ordinary skill in the art will realize that the foregoing description is illustrative only and is not intended to be in any way limiting. Reference is made in detail to implementations of examples as illustrated in the accompanying drawings. The same reference indicators will be used throughout the drawings and the following description to refer to the same or like items.

Additionally, the foregoing description of some examples has been presented only for the purpose of illustration and description and is not intended to be exhaustive or to limit the disclosure to the precise forms disclosed. Numerous modifications and adaptations thereof will be apparent to those skilled in the art without departing from the spirit and scope of the disclosure. In the interest of clarity, not all of the routine features of the examples described herein are shown and described. It will, of course, be appreciated that in the development of any such actual implementation, numerous implementation-specific decisions must be made in order to achieve the developer's specific goals, such as compliance with application- and business-related constraints, and that these specific goals will vary from one implementation to another and from one developer to another.

Reference herein to an example or implementation means that a particular feature, structure, operation, or other characteristic described in connection with the example may be included in at least one implementation of the disclosure. The disclosure is not restricted to the particular examples or implementations described as such. The appearance of the phrases "in one example," "in an example," "in one implementation," or "in an implementation," or variations of the same in various places in the specification does not necessarily refer to the same example or implementation. Any particular feature, structure, operation, or other characteristic described in this specification in relation to one example or implementation may be combined with other features, structures, operations, or other characteristics described in respect of any other example or implementation.

Use herein of the word "or" is intended to cover inclusive and exclusive OR conditions. In other words, A or B or C includes any or all of the following alternative combinations as appropriate for a particular usage: A alone; B alone; C alone; A and B only; A and C only; B and C only; and A and B and C.

### EXAMPLES

These illustrative examples are mentioned not to limit or define the scope of this disclosure, but rather to provide examples to aid understanding thereof. Illustrative examples are discussed above in the Detailed Description, which provides further description. Advantages offered by various examples may be further understood by examining this specification.

As used below, any reference to a series of examples is to be understood as a reference to each of those examples disjunctively (e.g., "Examples 1-4" is to be understood as "Examples 1, 2, 3, or 4").

Example 1 is a computing apparatus comprising: a computer-readable storage media; a drop tray engine comprising processor-executable instructions stored on the computer-readable storage media; and a processor coupled to the computer-readable storage media and configured to execute the processor-executable instructions, wherein the processor-executable instructions, when executed by the processor, direct the computing apparatus, to at least: detect a drag-and-drop action performed on a content on a user interface of a client device; determine one or more attributes of the content; determine a plurality of actions to be performed with the content based on the one or more attributes of the content; generate a drop tray comprising a plurality of action targets representing the plurality of actions; and display the drop tray responsive to the drag-and-drop action on the user interface of the client device, wherein the drop tray displays the plurality of action targets.

Example 2 is the computing apparatus of any previous or subsequent Example, wherein the processor-executable instructions, when executed by the processor, further direct the computing apparatus to: detect completion of the drag-and-drop action of the content within physical proximity to a first action target within the drop tray; and prompt a first application associated with the first action target to execute a first action associated with the first action target.

Example 3 is the computing apparatus of any previous or subsequent Example, wherein the processor-executable instructions to determine the plurality of actions to be performed with the content based on the one or more attributes of the content, when executed by the processor, further direct the computing apparatus to: determine one or more recent actions performed by the client device; and select a first action of the one or more recent actions based on the one or more attributes of the content to be included in the drop tray.

Example 4 is the computing apparatus of any previous or subsequent Example, wherein the processor-executable instructions to display the drop tray responsive to the drag-and-drop action, when executed by the processor, further direct the computing apparatus to: determine that the drag-and-drop action is within a threshold region of the user interface; and display the drop tray responsive to the drag-and-drop action being within the threshold region of the user interface.

Example 5 is the computing apparatus of any previous or subsequent Example, wherein: the processor-executable instructions, when executed by the processor, further direct the computing apparatus to: determine a plurality of historical actions with historical contents comprising at least one common attribute, wherein the one or more attributes of the content comprise the at least one common attribute; and rank the plurality of actions based on the plurality of historical actions; and the processor-executable instructions to generate the drop tray comprising the plurality of actions, when executed by the processor, further direct the computing apparatus to: arrange the plurality of action targets within the drop tray based on the ranking of the plurality of actions.

Example 6 is the computing apparatus of any previous or subsequent Example, wherein the processor-executable instructions, when executed by the processor, further direct the computing apparatus to: detect completion of the drag-and-drop action of the content is within physical proximity to a first action target within the drop tray; prompt a first action associated with the first action target to be performed with the content; and generate a haptic response responsive to execution of the first action.

Example 7 is a method comprising: detecting, by a drop tray engine, a drag-and-drop action performed on a content on a user interface of a client device; determining, by the drop tray engine, one or more attributes of the content; determining, by the drop tray engine, a plurality of actions to be performed with the content based on the one or more attributes of the content; generating, by the drop tray engine, a drop tray comprising a plurality of action targets representing the plurality of actions; and displaying, by the drop tray engine, the drop tray responsive to the drag-and-drop action on the user interface of the client device, wherein the drop tray displays the plurality of action targets.

Example 8 is the method of any previous or subsequent Example, wherein generating, by the drop tray engine, the drop tray comprising the plurality of action targets comprises: determining, by the drop tray engine, a first action to be performed with the content, wherein the plurality of actions comprise the first action; generating, by the drop tray engine, an application icon representing a first application configured to execute the first action; and generating, by the drop tray engine, the plurality of action targets to comprise the application icon to represent the first action.

Example 9 is the method of any previous or subsequent Example, wherein the method further comprises: detecting, by the drop tray engine, completion of the drag-and-drop action of the content is within physical proximity to a first action target within the drop tray, wherein the first action target represents a first action; and coordinating, by the drop tray engine, execution of the first action with the content by a first application associated with the first action.

Example 10 is the method of any previous or subsequent Example, wherein determining, by the drop tray engine, the plurality of actions to be performed with the content based on the one or more attributes of the content comprises: determining, by the drop tray engine, one or more recent applications associated with the client device; determining, by the drop tray engine, a first application of the one or more recent applications based on the one or more attributes of the content; and determining, by the drop tray engine, a first action to be performed with the content within the first application based on the one or more attributes of the content.

Example 11 is the method of any previous or subsequent Example, wherein: the method further comprises: determining, by the drop tray engine, a plurality of historical actions with historical contents comprising at least one common attribute, wherein the one or more attributes of the content comprise the at least one common attribute; and ranking, by the drop tray engine, the plurality of actions based on the plurality of historical actions; and generating, by the drop tray engine, the drop tray comprising the plurality of action targets representing the plurality of actions comprises: arranging, by the drop tray engine, the plurality of action targets within the drop tray based on the ranking of the plurality of actions.

Example 12 is the method of any previous or subsequent Example, wherein: a first action of the plurality of actions comprises sending the content within a communications application; the method further comprises: determining, by the drop tray engine, one or more contacts within the communications application for receiving the content; and determining, by the drop tray engine, the plurality of actions to be performed with the content based on the one or more attributes of the content comprises: determining, by the drop tray engine, the first action to send the content to a first contact within the communications application.

Example 13 is the method of any previous or subsequent Example, wherein determining, by the drop tray engine, the plurality of actions to be performed with the content based on the one or more attributes of the content comprises: submitting, by the drop tray engine, a request to an action prediction model, wherein the request is for a listing of actions the client device is likely to take with the content; receiving, by the drop tray engine, a response comprising the listing of actions from the action prediction model, wherein the action prediction model: generates the response upon receiving the request from the drop tray engine; and is trained using historical action data associated with the client device; and determining, by the drop tray engine, the plurality of actions to be performed with the content based on the listing of actions received from the action prediction model.

Example 14 is the method of any previous or subsequent Example, wherein the method further comprises: detecting, by the drop tray engine, the content dropped within physical proximity to a first action target within the drop tray, wherein the first action target represents a first action; performing, by the drop tray engine, a first action with the content; and generating, by the drop tray engine, a haptic response responsive to execution of the first action.

Example 15 is a computer readable storage media comprising processor-executable instructions configured to cause a processor to: detect, by a drop tray engine, a drag-and-drop action performed on a content on a user interface of a client device; determine, by the drop tray engine, one or more attributes of the content; determine, by the drop tray engine, a plurality of actions to be performed with the content based on the one or more attributes of the content; generate, by the drop tray engine, a drop tray comprising a plurality of action targets representing the plurality of actions; and overlay, by the drop tray engine, the drop tray responsive to the drag-and-drop action on the user interface of the client device, wherein the drop tray displays the plurality of action targets.

Example 16 is the computer readable storage media of any previous or subsequent Example, wherein the processor-executable instructions cause the processor to further execute processor-executable instructions stored in the computer readable storage media to: detect, by the drop tray engine, the content dropped within physical proximity to a first action target within the drop tray, wherein the first action target represents a first action; prompt, by the drop tray engine, a first application associated with the first action to open; and coordinate, by the drop tray engine, execution of the first action with the content by the first application associated with the first action.

Example 17 is the computer readable storage media of any previous or subsequent Example, wherein: the processor-executable instructions to determine, by the drop tray engine, the one or more attributes of the content cause the processor to further execute processor-executable instructions stored in the computer readable storage media to: determine, by the drop tray engine, a content type of the content; and the processor-executable instructions to determine, by the drop tray engine, the plurality of actions to be performed with the content based on the one or more attributes of the content cause the processor to further execute processor-executable instructions stored in the computer readable storage media to: determine, by the drop tray engine, a first application compatible with the content based on the content type of the content; and determine, by the drop tray engine, a first action to be performed with the content within the first application, wherein the plurality of actions comprise the first action.

Example 18 is the computer readable storage media of any previous or subsequent Example, wherein the processor-executable instructions to determine, by the drop tray engine, the plurality of actions to be performed with the content based on the one or more attributes of the content cause the processor to further execute processor-executable instructions stored in the computer readable storage media to: generate, via an action prediction model of the drop tray engine, a listing of actions the client device is likely to take with the content based on the one or more attributes; and determine, by the drop tray engine, the plurality of actions to be performed with the content based on the listing of actions received from the action prediction model.

Example 19 is the computer readable storage media of any previous or subsequent Example, wherein the processor-executable instructions to determine, by the drop tray engine, the plurality of actions to be performed with the content based on the one or more attributes of the content cause the processor to further execute processor-executable instructions stored in the computer readable storage media to: determine, by the drop tray engine, a first application compatible with the content based on the one or more attributes of the content; and determine, by the drop tray engine, a first action to be performed with the content within the first application, wherein the plurality of actions comprise the first action.

Example 20 is the computer readable storage media of any previous or subsequent Example, wherein: the processor-executable instructions to determine, by the drop tray engine, the one or more attributes of the content cause the processor to further execute processor-executable instructions stored in the computer readable storage media to: parse, by the drop tray engine, metadata of the content; and determine, by the drop tray engine, a content type of the content from the metadata, wherein the one or more attributes of the content comprise the content type of the content; and the processor-executable instructions to determine, by the drop tray engine, the plurality of actions to be performed with the content based on the one or more attributes of the content cause the processor to further execute processor-executable instructions stored in the computer readable storage media to: determine, by the drop tray engine, a plurality of historical actions based on the client device; and determine, by the drop tray engine, the plurality of actions to be performed with the content based on a subset of the plurality of historical actions involving historical content comprising the content type.

## Claims

1. A computing apparatus (800) comprising:
a computer-readable storage media (893);
a drop tray engine (204) comprising processor-executable instructions (895) stored on the computer-readable storage media (893); and
a processor (892) coupled to the computer-readable storage media (893) and configured to execute the processor-executable instructions (895), wherein the processor-executable instructions (895), when executed by the processor (892), direct the computing apparatus (800), to at least:
detect a drag-and-drop action (218) performed on a content (215) on a user interface (208) of a client device (202);
determine one or more attributes (225) of the content (215);
determine a plurality of actions (236) to be performed with the content (215) based on the one or more attributes (225) of the content (215);
generate a drop tray (212) comprising a plurality of action targets (214) representing the plurality of actions (236); and
display the drop tray (212) responsive to the drag-and-drop action (218) on the user interface (208) of the client device (202), wherein the drop tray (212) displays the plurality of action targets (214).

2. The computing apparatus (800) of claim 1, wherein the processor-executable instructions (895), when executed by the processor (892), further direct the computing apparatus (800) to:
detect completion (258) of the drag-and-drop action (218) of the content (215) within physical proximity (554) to a first action target (214) within the drop tray (212); and
prompt a first application (260) associated with the first action target (214) to execute a first action (236) associated with the first action target (214).

3. The computing apparatus (800) of claim 1 or claim 2, wherein the processor-executable instructions (895) to determine the plurality of actions (236) to be performed with the content (215) based on the one or more attributes (225) of the content (215), when executed by the processor (892), further direct the computing apparatus (800) to:
determine one or more recent actions (236) performed by the client device (202); and
select a first action (236) of the one or more recent actions (236) based on the one or more attributes (225) of the content (215) to be included in the drop tray (212).

4. The computing apparatus (800) of any preceding claim, wherein the processor-executable instructions (895) to display the drop tray (212) responsive to the drag-and-drop action (218), when executed by the processor (892), further direct the computing apparatus (800) to:
determine that the drag-and-drop action (218) is within a threshold region (413) of the user interface (208); and
display the drop tray (212) responsive to the drag-and-drop action (218) being within the threshold region (413) of the user interface (208).

5. The computing apparatus (800) of any preceding claim, wherein:
the processor-executable instructions (895), when executed by the processor (892), further direct the computing apparatus (800) to:
determine a plurality of historical actions (236) with historical contents (215) comprising at least one common attribute, wherein the one or more attributes (225) of the content (215) comprise the at least one common attribute; and
rank the plurality of actions (236) based on the plurality of historical actions (236); and
the processor-executable instructions (895) to generate the drop tray (212) comprising the plurality of actions (236), when executed by the processor (892), further direct the computing apparatus (800) to:
arrange the plurality of action targets (214) within the drop tray (212) based on the ranking of the plurality of actions (236).

6. The computing apparatus (800) of any preceding claim, wherein the processor-executable instructions (895), when executed by the processor (892), further direct the computing apparatus (800) to:
detect completion (258) of the drag-and-drop action (218) of the content (215) is within physical proximity (554) to a first action target (214) within the drop tray (212);
prompt a first action (236) associated with the first action target (214) to be performed with the content (215); and
generate a haptic response responsive to execution of the first action (236).

7. A method (300) comprising:
detecting, by a drop tray engine (204), a drag-and-drop action (218) performed on a content (215) on a user interface (208) of a client device (202);
determining, by the drop tray engine (204), one or more attributes (225) of the content (215);
determining, by the drop tray engine (204), a plurality of actions (236) to be performed with the content (215) based on the one or more attributes (225) of the content (215);
generating, by the drop tray engine (204), a drop tray (212) comprising a plurality of action targets (214) representing the plurality of actions (236); and
displaying, by the drop tray engine (204), the drop tray (212) responsive to the drag-and-drop action (218) on the user interface (208) of the client device (202), wherein the drop tray (212) displays the plurality of action targets (214).

8. The method (300) of claim 7, wherein generating, by the drop tray engine (204), the drop tray (212) comprising the plurality of action targets (214) comprises:
determining, by the drop tray engine (204), a first action (236) to be performed with the content (215), wherein the plurality of actions (236) comprise the first action (236);
generating, by the drop tray engine (204), an application icon representing a first application (260) configured to execute the first action (236); and
generating, by the drop tray engine (204), the plurality of action targets (214) to comprise the application icon to represent the first action (236).

9. The method (300) of claim 7 or claim 8, wherein the method (300) further comprises:
detecting, by the drop tray engine (204), completion (258) of the drag-and-drop action (218) of the content (215) is within physical proximity (554) to a first action target (214) within the drop tray (212), wherein the first action target (214) represents a first action (236); and
coordinating, by the drop tray engine (204), execution of the first action (236) with the content (215) by a first application (260) associated with the first action (236).

10. The method (300) of any of claims 7 to 9, wherein determining, by the drop tray engine (204), the plurality of actions (236) to be performed with the content (215) based on the one or more attributes (225) of the content (215) comprises:
determining, by the drop tray engine (204), one or more recent applications (260) associated with the client device (202);
determining, by the drop tray engine (204), a first application (260) of the one or more recent applications (260) based on the one or more attributes (225) of the content (215); and
determining, by the drop tray engine (204), a first action to be performed with the content (215) within the first application (260) based on the one or more attributes (225) of the content (215).

11. The method (300) of any of claims 7 to 10, wherein:
the method (300) further comprises:
determining, by the drop tray engine (204), a plurality of historical actions (236) with historical contents (215) comprising at least one common attribute, wherein the one or more attributes (225) of the content (215) comprise the at least one common attribute; and
ranking, by the drop tray engine (204), the plurality of actions (236) based on the plurality of historical actions (236); and
generating, by the drop tray engine (204), the drop tray (212) comprising the plurality of action targets (214) representing the plurality of actions (236) comprises:
arranging, by the drop tray engine (204), the plurality of action targets (214) within the drop tray (212) based on the ranking of the plurality of actions (236).

12. The method (300) of any of claims 7 to 11, wherein:
a first action (236) of the plurality of actions (236) comprises sending the content (215) within a communications application (260);
the method (300) further comprises:
determining, by the drop tray engine (204), one or more contacts within the communications application (260) for receiving the content (215); and
determining, by the drop tray engine (204), the plurality of actions (236) to be performed with the content (215) based on the one or more attributes (225) of the content (215) comprises:
determining, by the drop tray engine (204), the first action to send the content (215) to a first contact within the communications application (260).

13. The method (300) of any of claims 7 to 12, wherein determining, by the drop tray engine (204), the plurality of actions (236) to be performed with the content (215) based on the one or more attributes (225) of the content (215) comprises:
submitting, by the drop tray engine (204), a request to an action prediction model (206), wherein the request is for a listing of actions (236) the client device (202) is likely to take with the content (215);
receiving, by the drop tray engine (204), a response comprising the listing of actions (236) from the action prediction model (206), wherein the action prediction model (206):
generates the response upon receiving the request from the drop tray engine (204); and
is trained using historical action data associated with the client device (202); and
determining, by the drop tray engine (204), the plurality of actions (236) to be performed with the content (215) based on the listing of actions (236) received from the action prediction model (206).

14. The method (300) of any of claims 7 to 13, wherein the method (300) further comprises:
detecting, by the drop tray engine (204), the content (215) dropped within physical proximity (554) to a first action target (214) within the drop tray (212), wherein the first action target (214) represents a first action (236);
performing, by the drop tray engine (204), a first action with the content (215); and
generating, by the drop tray engine (204), a haptic response responsive to execution of the first action (236).

15. A computer readable storage media (893) comprising processor-executable instructions (895) configured to cause a processor (892) to:
detect, by a drop tray engine (204), a drag-and-drop action (218) performed on a content (215) on a user interface (208) of a client device (202);
determine, by the drop tray engine (204), one or more attributes (225) of the content (215);
determine, by the drop tray engine (204), a plurality of actions (236) to be performed with the content (215) based on the one or more attributes (225) of the content (215);
generate, by the drop tray engine (204), a drop tray (212) comprising a plurality of action targets (214) representing the plurality of actions (236); and
overlay, by the drop tray engine (204), the drop tray (212) responsive to the drag-and-drop action (218) on the user interface (208) of the client device (202), wherein the drop tray (212) displays the plurality of action targets (214).
